# FASCICULE DE BREVET EUROPEEN

(11) **EP 2 825 876 B1**
(45) Date de publication et mention de la délivrance du brevet: **08.05.2019**
(21) Numéro de dépôt: 13711077.1
(22) Date de dépôt: 28.02.2013
(51) Int. Cl.: G01N 29/06, G01N 29/22, G01N 29/26

(54) **DISPOSITIF DE SONDAGE A ULTRASONS MULTICAPTEURS ET PROCEDE DE FABRICATION D'UN TEL DISPOSITIF, PROCEDE DE COMMANDE D'UN TEL DISPOSITIF ET PROGRAMME D'ORDINATEUR CORRESPONDANT**
ULTRASCHALL-ARRAY-SONDE UND VERFAHREN ZUM HERSTELLEN EINER SOLCHEN SONDE, STEUERUNGSVERFAHREN EINER SOLCHEN SONDE UND ENTSPRECHENDES COMPUTERPROGRAMM
ULTRASONIC TRANSDUCER ARRAY PROBE AND METHOD FOR FABRICATING SUCH PROBE, METHOD FOR CONTROLLING SUCH PROBE AND CORRESPONDING COMPUTER PROGRAM

(30) Priorité: 15.03.2012 FR 1252354
(43) Date de publication de la demande: 21.01.2015
(73) Titulaire: Commissariat à l'Énergie Atomique et aux Énergies Alternatives, 75015 Paris (FR)
(72) Inventeur: CASULA, Olivier, F-91310 Longpont-sur-Orge (FR)
(74) Mandataire: Bonnet, Michel
(86) Numéro de dépôt international: PCT/FR2013/050420
(87) Numéro de publication internationale: WO 2013/135988

(56) Documents cités:
- US-A- 4 604 897
- US-A1- 2007 078 345
- US-A1- 2007 167 768
- US-A1- 2010 106 431
- COSKUN TEKES ET AL: "Simulated annealing based optimization of dual-ring arrays for forward-looking IVUS and ICE imaging", 2010 IEEE INTERNATIONAL ULTRASONICS SYMPOSIUM PROCEEDINGS, 11 octobre 2010 (2010-10-11), pages 999-1002, XP031952782, DOI: 10.1109/ULTSYM.2010.5935646 ISBN: 978-1-4577-0382-9
- S ROBERT ET AL: "MÉTHODES ULTRASONORES DE DÉTECTION ET D'IMAGERIE TEMPS-RÉEL IMPLÉMENTÉES DANS LES SYSTÈMES D'ACQUISITION M2M - REAL-TIME ULTRASONIC TECHNIQUES IMPLEMENTED IN M2M ACQUISITION SYSTEMS", JOURNÉES COFREND "CONFÉRENCES ET EXPOSITION SUR LES ESSAIS NON DESTRUCTIFS" 2011, 24 mai 2011 (2011-05-24), pages 1-13, XP055037304, Dunkerque (FR)

## Description

La présente invention concerne un dispositif de sondage à ultrasons muni d'une pluralité de capteurs et un procédé de fabrication d'un tel dispositif. Elle concerne également un procédé de commande de capteurs d'une sonde à ultrasons et un programme d'ordinateur correspondant.

L'invention s'applique notamment au domaine de l'imagerie médicale ainsi qu'au contrôle non destructif de pièces mécaniques, en particulier de pièces ayant une forme complexe ou susceptibles de présenter des défauts difficilement détectables.

La terminologie suivante sera utilisée dans la description qui va suivre, ainsi que dans les revendications.

Une onde ultrasonore, ou ultrasons, est une onde mécanique de fréquences supérieures à 20 000 Hertz se propageant dans un milieu solide, liquide ou gazeux.

Les termes « position ou orientation d'un élément X par rapport à un élément Y », signifient « position ou orientation d'un référentiel lié à l'élément X par rapport à un référentiel lié à l'élément Y ».

Les dispositifs de sondage à ultrasons les plus simples présentent un unique capteur à élément de transduction unique. Pour diriger une onde émise par cet élément de transduction dans une direction privilégiée, un sabot ou prisme acoustique (de l'anglais « wedge »), généralement en plastique rigide, peut être interposé entre le capteur et la pièce à inspecter. L'inclinaison du sabot implique une réfraction des ondes émises par l'élément de transduction. Mais ces dispositifs simples sont de plus en plus remplacés par des dispositifs à éléments multiples. Dans ces nouveaux dispositifs, les différents éléments sont des transducteurs identiques généralement disposés linéairement ou en matrice, activés successivement en émission par des signaux de commande délivrés selon une loi de retards permettant à un faisceau ultrasonore résultant de l'ensemble des signaux ultrasonores émis par ces transducteurs de focaliser en un point visé.

Le terme « identiques » signifie que les transducteurs sont conçus pour présenter des dimensions géométriques et des caractéristiques d'émissions ultrasonores identiques, aux dispersions de fabrication près, généralement de l'ordre de 10 % en ce qui concerne les dimensions géométriques et les caractéristiques de directivité résultantes. En particulier, tous les transducteurs présentent, par rapport à leur géométrie commune, un cône de directivité identique (à 10 % près), ce cône de directivité étant défini par une direction principale moyenne et un angle effectif de fonctionnement autour de cette direction principale moyenne.

L'invention porte ainsi plus précisément sur un dispositif de sondage à ultrasons comportant :
- un boîtier,
- des moyens de détermination d'une loi de retards à partir de paramètres de focalisation représentant une position souhaitée d'un point focal par rapport à un référentiel lié au boîtier,
- des moyens de commande conçus pour fournir des signaux de commande à partir de la loi de retards,
- une pluralité de capteurs attachés au boîtier, conçus pour recevoir les signaux de commande et pour, en réponse, émettre dans l'objet des ondes ultrasonores retardées les unes par rapport aux autres suivant la loi de retards de manière qu'elles focalisent au point focal défini par les paramètres de focalisation, chaque capteur présentant, par sa conception et sa disposition dans le boîtier, un cône de directivité défini par une direction principale moyenne et un angle effectif de fonctionnement autour de cette direction principale moyenne.

Ces dispositifs sont généralement destinés à être mis directement au contact d'une pièce à inspecter et à être déplacés sur une surface de cette pièce tout en faisant évoluer la loi de retards, pour obtenir une image, bidimensionnelle ou tridimensionnelle, de l'intérieur de la pièce, sur une certaine surface ou dans un certain volume. A chaque position donnée du dispositif de sondage contre la pièce à inspecter, seuls les points se situant dans l'intersection des cônes de directivité de tous les capteurs peuvent être correctement visés. Ces cônes de directivité sont tous identiques à une translation près, compte tenu de la disposition linéaire ou matricielle des capteurs. Leur angle effectif de fonctionnement commun doit donc être suffisamment large pour couvrir une intersection significative à une distance suffisamment proche des capteurs pour être acoustiquement visible. Là encore, pour diriger une onde émise par cet élément de transduction dans une direction privilégiée, un sabot peut être interposé entre les capteurs et la pièce à inspecter.

Par ailleurs, compte tenu d'irrégularités de surface inévitables dans la pièce à inspecter, des améliorations ont été apportées par la conception de dispositifs à transducteurs multiples et mobiles s'adaptant à la surface de contact. Mais cela peut affecter, en cours d'utilisation, l'orientation des différents capteurs et donc celle de leurs cônes de directivité, de sorte qu'il doit aussi en être tenu compte dans la valeur de leur angle effectif de fonctionnement commun qui doit être d'autant plus grande que les irrégularités sont susceptibles d'être importantes.

Le brevet français publié sous le numéro FR 2 786 651 décrit ainsi un dispositif de sondage à ultrasons flexible dans lequel les transducteurs sont attachés de manière mobile au boîtier afin de pouvoir épouser la géométrie de la surface de l'objet à sonder. Il est alors prévu des moyens pour déterminer les positions des transducteurs à chaque instant et pour fournir ces positions aux moyens de détermination de la loi de retards. Ainsi, les moyens de détermination de la loi de retards peuvent tenir compte des positions des transducteurs mobiles pour corriger la loi de retards qu'ils appliquent et conserver la position souhaitée du point focal par rapport au boîtier.

Une implémentation améliorée de dispositif de sondage flexible à transducteurs multiples et mobiles est également décrite dans Le brevet français publié sous le numéro FR 2 862 385 dans lequel des éléments de plaquage des transducteurs assurent un bon contact avec la pièce à inspecter et permettent d'obtenir une estimation précise de la position des transducteurs.

Ces deux solutions sont efficaces pour inspecter des pièces avec des angles d'inspections limités, notamment inférieurs à π/3. Au-delà, la formation des ondes émises dans les grands angles est délicate. Pour compenser la faible amplitude des signaux engendrés dans les grands angles, notamment supérieurs à π/3, les signaux sont amplifiés en réception. Mais cela a pour conséquence de rendre visible des signaux provenant d'échos parasites, en particulier ceux résultant d'une réflexion des ondes émises par chaque transducteur dans d'autres directions que celle souhaitée. Celles-ci sont alors réfléchies par la géométrie de la pièce à inspecter et captées par les éléments récepteurs. La présence de signaux parasites crée un bruit produisant une saturation de la dynamique qui crée ainsi une limite de détection pour ce type de dispositif de sondage. Ce phénomène est directement lié au fait que la sonde est constituée de transducteurs piézoélectriques, de mêmes dimensions, engendrant des ondes identiques dans des cônes de directivité identiques, ces ondes étant suffisamment omnidirectionnelles pour que chacun des transducteurs produise une énergie suffisante au point focal. L'utilisation d'une loi de retards permet de synchroniser l'arrivée des ondes émises par chacun des transducteurs au point focal. Mais on comprend que seule une partie de l'énergie rayonnée par les transducteurs est finalement utile à la focalisation. Le reste de l'énergie participe au bruit.

Une solution alternative est décrite dans le brevet français publié sous le numéro FR 2 930 642. Selon cette solution, les transducteurs du dispositif de sondage sont rigidement solidaires, mais au contact d'une face arrière d'un sabot dont la face avant est flexible pour s'adapter à la surface d'appui contre la pièce à inspecter. Le dispositif comporte alors un profilomètre pour mesurer les variations de la surface avant du sabot et pour en tenir compte dans la correction de la loi de retards. Mais cette solution ne résout pas le problème des angles effectifs de fonctionnement des transducteurs qui doivent être suffisamment grands pour couvrir une zone de focalisation significative et compenser les irrégularités de surface de la pièce à inspecter.

US2007/0167768 décrit un dispositif de sondage à ultrasons employé dans le diagnostic médical et comportant un ensemble de capteurs présentant des cônes de directivité ayant des directions principales moyennes distinctes.

US2010/0106431 décrit aussi un dispositif de sondage à ultrasons comportant un ensemble de capteurs présentant des cônes de focalisation distincts.

II peut ainsi être souhaité de prévoir un dispositif de sondage à ultrasons qui permette de résoudre au moins une partie des problèmes et contraintes précités, notamment par exemple en permettant de concentrer davantage d'énergie acoustique dans une zone de focalisation souhaitée pour améliorer la précision des mesures dans cette zone.

L'invention a donc pour objet un dispositif de sondage à ultrasons comportant :
- un boîtier,
- des moyens de détermination d'une loi de retards à partir de paramètres de focalisation représentant une position souhaitée d'un point focal par rapport à un référentiel lié au boîtier,
- des moyens de commande conçus pour fournir des signaux de commande à partir de la loi de retards,
- une pluralité de capteurs attachés au boîtier et disposés linéairement ou de façon matricielle dans celui-ci, conçus pour recevoir les signaux de commande et pour, en réponse, émettre dans l'objet des ondes ultrasonores retardées les unes par rapport aux autres suivant la loi de retards de manière qu'elles focalisent au point focal défini par les paramètres de focalisation, chaque capteur présentant, par sa conception et sa disposition dans le boîtier, un cône de directivité défini par une direction principale moyenne et un angle effectif de fonctionnement autour
de cette direction principale moyenne à l'extérieur duquel ce capteur n'est pas apte à viser acoustiquement un point par focalisation, dans lequel au moins deux des capteurs sont conçus et disposés différemment l'un de l'autre de manière à présenter des cônes de directivité distincts au moins par leurs angles effectifs de fonctionnement de valeurs distinctes selon une variation dans au moins une direction de la disposition linéaire ou matricielle.

En prévoyant des capteurs à cônes de directivité distincts, il est possible d'opérer un réglage de la zone d'intersection des cônes de directivité. Ainsi, selon l'application ou l'inspection visée, notamment selon l'angle d'inspection souhaité pour la détection de certains types de défauts, il est possible, par conception et disposition des capteurs du dispositif de sondage, de diriger la zone de sensibilité du dispositif de sondage vers une surface ou un volume à privilégier et de concentrer l'énergie d'émission et de réception dans cette zone de sensibilité. Une autre conséquence de cette configuration est de limiter les contraintes portant sur les angles effectifs de fonctionnement des capteurs, notamment les contraintes liées aux irrégularités de surface de la pièce à inspecter, leurs valeurs pouvant être réduites du fait d'un meilleur ciblage.

De façon optionnelle, les capteurs sont conçus et disposés différemment de manière à présenter des cônes de directivité orientés vers une zone limitée de focalisation commune à tous les capteurs, lesdites directions principales moyennes convergeant dans cette zone limitée de focalisation.

La convergence des directions principales dans une zone limitée assure l'optimisation de la concentration d'énergie d'émission.

Selon l'invention, les capteurs sont disposés linéairement ou de façon matricielle dans le boîtier de manière à présenter une variation des angles effectifs de fonctionnement de leurs cônes de directivité dans au moins une direction de la disposition linéaire ou matricielle.

De façon optionnelle également, au moins un des capteurs comporte un sabot de réfraction des ondes acoustiques permettant de configurer l'orientation de la direction principale moyenne de ce capteur.

De façon optionnelle également, au moins un des capteurs comporte une pluralité de transducteurs conçus pour recevoir une partie des signaux de commande et pour, en réponse, émettre des ondes ultrasonores retardées les unes par rapport aux autres suivant une loi de retards définie pour ladite partie des signaux de commande de manière qu'elles focalisent au point focal défini par les paramètres de focalisation.

De façon optionnelle également, les capteurs sont attachés de manière mobile au boîtier, comportant des moyens de localisation des capteurs conçus pour déterminer des positions des capteurs par rapport à un référentiel lié au boîtier et dans lequel les moyens de détermination de la loi de retards sont conçus pour déterminer la loi de retards à partir en outre de ces positions des capteurs.

Ainsi la pluralité de capteurs peut s'adapter aux irrégularités éventuelles de la surface de la pièce à inspecter tant que les irrégularités présentent localement des rayons de courbure compatibles avec les tailles des capteurs. En particulier, en prévoyant plusieurs capteurs mono- ou multiéléments mobiles au lieu d'un seul capteur multiéléments, on diminue la taille de chaque capteur sans réduire les dimensions de la sonde, ce qui permet de s'adapter plus finement aux irrégularités de surface à taille globale de sonde constante. On résout de cette façon l'apparente contradiction de certains standards qui, tout en préconisant des tailles de sondes supérieures à des minimas, interdisent à ces sondes d'opérer sur des surfaces dont les irrégularités engendrent localement des écarts trop importants entre la sonde et la surface de la pièce à inspecter.

De façon optionnelle également, le ou les transducteurs d'un même capteur sont attachés de manière mobile au capteur, comportant des moyens de localisation des transducteurs conçus pour déterminer des positions des transducteurs par rapport à un référentiel lié au capteur dans lequel ils se trouvent, et dans lequel les moyens de détermination de la loi de retards sont conçus pour déterminer la loi de retards à partir en outre de ces positions des transducteurs.

L'invention a également pour objet un procédé de fabrication d'un dispositif de sondage à ultrasons selon l'invention, comportant les étapes suivantes :
- détermination de contraintes de focalisation parmi lesquelles une direction principale d'inspection du dispositif de sondage et des paramètres géométriques d'une zone de focalisation souhaitée,
- identification de paramètres du dispositif de sondage parmi lesquels le nombre de capteurs et la direction principale moyenne et l'angle effectif de fonctionnement du cône de directivité de chaque capteur,
- optimisation desdits paramètres du dispositif de sondage à l'aide de simulations ou d'essais en fonction desdites contraintes de focalisation, cette optimisation comportant une différenciation des cônes de directivité au moins par leurs angles effectifs de fonctionnement de valeurs distinctes selon une variation dans au moins une direction de la disposition linéaire ou matricielle de la pluralité de capteurs dans le boîtier.

L'invention a également pour objet un procédé de commande de capteurs d'une sonde à ultrasons, chaque capteur présentant par conception et disposition dans un boîtier de la sonde un cône de directivité défini par une direction principale moyenne et un angle effectif de fonctionnement autour de cette direction principale moyenne, le procédé comportant les étapes suivantes :
- déterminer une loi de retards à partir de paramètres de focalisation représentant une position souhaitée d'un point focal par rapport à un référentiel lié au boîtier,
- fournir des signaux de commande aux capteurs à partir de la loi de retards, dans lequel, les capteurs sont disposés linéairement ou de façon matricielle dans le boîtier, et où au moins deux des capteurs sont conçus et disposés différemment l'un de l'autre de manière à présenter des cônes de directivité distincts au moins par leurs angles effectifs de fonctionnement de valeurs distinctes selon une variation dans au moins une direction de la disposition linéaire ou matricielle et la détermination de la loi de retards tient compte de ces distinctions.

L'invention a également pour objet un programme d'ordinateur téléchargeable depuis un réseau de communication et/ou enregistré sur un support lisible par ordinateur et/ou exécutable par un processeur, comprenant des instructions pour la mise en oeuvre d'un procédé de commande de capteurs d'une sonde à ultrasons selon l'invention, lorsque ledit programme est exécuté par un ordinateur.

L'invention sera mieux comprise à l'aide de la description qui va suivre, donnée uniquement à titre d'exemple et faite en se référant aux dessins annexés dans lesquels :
- la figure 1 représente schématiquement la structure générale d'un dispositif de sondage comportant une sonde à ultrasons à pluralité de capteurs conforme à l'état de l'art,
- la figure 2 représente schématiquement la structure générale d'un dispositif de sondage comportant une sonde à ultrasons à pluralité de capteurs selon un mode de réalisation de l'invention,
- les figures 3 et 4 représentent schématiquement et en vue de dessous deux exemples de sonde à ultrasons pour le dispositif de sondage de la figure 2,
- la figure 5 représente schématiquement la structure générale d'une sonde à ultrasons selon un autre mode de réalisation du dispositif de sondage de la figure 2,
- la figure 6 illustre les étapes successives d'un procédé de commande des capteurs du dispositif de sondage de la figure 2, et
- la figure 7 illustre les étapes successives d'un procédé de fabrication du dispositif de sondage de la figure 2.

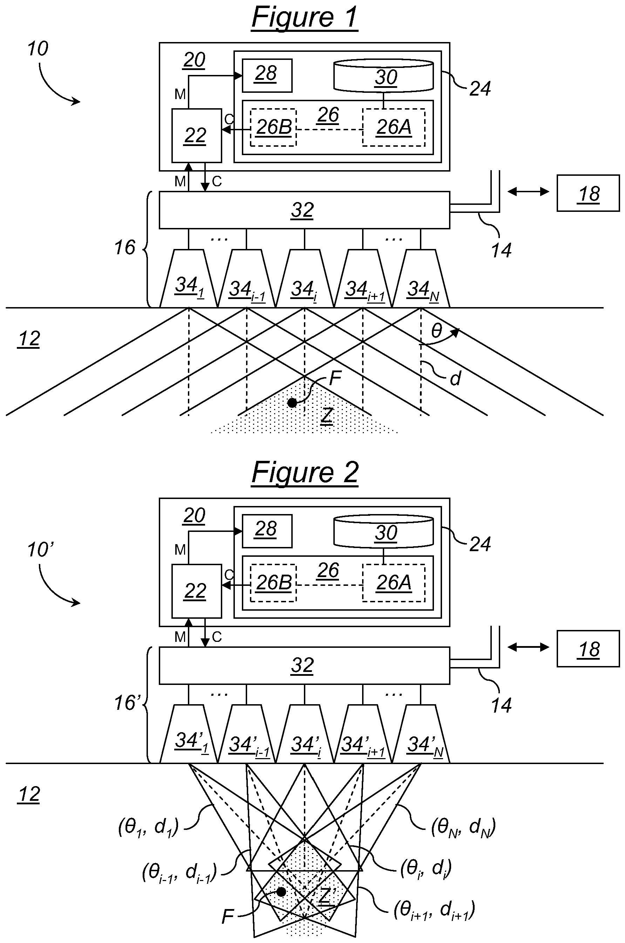

En référence à la figure 1, un dispositif de sondage 10 d'un objet 12 à pluralité de capteurs selon l'état de l'art comporte un bras 14, qui est éventuellement articulé, une sonde à ultrasons 16 fixée au bras 14 et des moyens 18 de commande du bras 14 conçus pour commander le bras 14 afin que ce dernier déplace la sonde 16 sur une surface de l'objet 12. Les moyens de commande 18 se basent généralement sur un trajet souhaité prédéfini de la sonde 16 par rapport à l'objet 12.

L'objet 12 est par exemple une pièce mécanique que l'on souhaite examiner par contrôle non destructif ou bien, dans un contexte médical, une partie du corps humain que l'on souhaite contrôler de manière non invasive.

En outre, le dispositif de sondage 10 comporte un circuit électronique 20, par exemple celui d'un ordinateur. Ce circuit électronique 20 est connecté à la sonde 16. Il présente une unité centrale de traitement 22, telle qu'un microprocesseur, et une mémoire 24 dans laquelle sont enregistrés un programme d'ordinateur 26 de commande de la sonde 16 et un programme d'ordinateur 28 de traitement de signaux retournés par la sonde 16. Ces programmes 26 et 28 comportent des instructions destinées à être exécutées par l'unité centrale de traitement 22 pour réaliser les fonctions définies par ces instructions.

En particulier, le programme d'ordinateur 26 comporte des instructions 26A de détermination d'une loi de retards à partir de paramètres de focalisation, notés P_{F/B}, représentant une position souhaitée d'un point focal F par rapport à un référentiel lié à la sonde 16. Ces paramètres de focalisation P_{F/B} sont par exemple localisés dans une base de données 30 stockée en mémoire 24. Le programme d'ordinateur 26 comporte également des instructions 26B de commande conçues pour fournir des signaux de commande C à partir de la loi de retards précitée.

La sonde 16 comporte tout d'abord un boîtier 32, c'est-à-dire un élément de structure indéformable qui sert de référentiel pour la sonde 16.

La sonde 16 comporte en outre des capteurs 34₁, ...,34_{N} (dans l'exemple de la figure 1, N=5) attachés au boîtier 32 et conçus pour émettre des ondes ultrasonores dans l'objet 12 en réponse aux signaux de commande C fournis par le circuit électronique 20 sur exécution des instructions 26A et 26B par l'unité centrale de traitement 22. Ces ondes ultrasonores sont retardées les unes par rapport aux autres suivant la loi de retards de manière à focaliser au point F. Les capteurs 34₁, ...,34_{N} sont en outre conçus pour détecter des échos des ondes ultrasonores se réfléchissant sur et dans l'objet 12 et pour fournir des signaux de mesure M correspondant à ces échos, ces signaux de mesure M étant alors transmis au circuit électronique 20. C'est plus précisément l'unité centrale de traitement 22 qui est conçue pour émettre vers la sonde 16 les signaux de commande C et pour recevoir de la sonde 16 les signaux de mesure M.

Dans la sonde 16 de la figure 1, conformément aux dispositifs décrits dans les brevets FR 2 786 651 et FR 2 862 385, les capteurs 34₁, ...,34_{N} sont des transducteurs, par exemple attachés de manière mobile au boîtier 32 de sorte qu'ils sont aptes à épouser la surface de l'objet 12 sur laquelle ils se déplacent, même lorsque cette dernière n'est pas plane ou présente des aspérités. Il est alors prévu des moyens (non illustrés sur la figure 1 mais détaillés dans les brevets FR 2 786 651 et FR 2 862 385) pour déterminer les positions des transducteurs à chaque instant et pour fournir ces positions au circuit électronique 20 de manière à en tenir compte lors de l'exécution des instructions 26A de détermination de la loi de retards. Par ailleurs, chaque transducteur 34ᵢ présente, par sa conception et sa disposition dans le boîtier 32, un cône de directivité défini par une direction principale moyenne d et un angle effectif de fonctionnement θ autour de cette direction principale moyenne.

Les transducteurs 34₁, ...,34_{N} du dispositif 10 de l'état de l'art sont tous identiques, aux dispersions de fabrication (≤ 10%) près. Par conséquent, en position moyenne de repos, c'est-à-dire en position plane des surfaces de contact des transducteurs, la direction principale moyenne d des cônes de directivité est la même pour tous les transducteurs. De même, l'angle effectif de fonctionnement θ des cônes de directivité est le même pour tous les transducteurs. Comme illustré sur la figure 1, dans une position donnée du dispositif de sondage 10 contre l'objet 12, seuls les points se situant dans une zone Z d'intersection des cônes de directivité de tous les transducteurs 34₁, ...,34_{N} peuvent être correctement visés. C'est donc dans cette zone Z que doit se trouver le point focal F. L'angle effectif de fonctionnement commun θ doit être suffisamment large pour couvrir une intersection significative à une distance suffisamment proche des capteurs pour être acoustiquement visible.

Le dispositif de sondage 10' représenté schématiquement sur la figure 2 se distingue de celui de la figure 1 par une conception et une disposition différentes des capteurs 34'₁, ...,34'_{N} que comporte sa sonde 16'. Plus précisément, les capteurs 34'₁, ...,34'_{N} sont conçus et disposés différemment dans le boîtier 32 de manière à présenter des cônes de directivité distincts par leurs directions principales moyennes et/ou leurs angles effectifs de fonctionnement. Par « distincts », on entend des cônes de directivité issus de capteurs se distinguant les uns des autres au delà des dispersions de fabrication. Ainsi, le capteur 34'₁ présente un cône de directivité de direction principale moyenne d₁ et d'angle effectif de fonctionnement θ₁ ; ... ; le capteur 34'ᵢ₋₁ présente un cône de directivité de direction principale moyenne dᵢ₋₁ et d'angle effectif de fonctionnement θᵢ₋₁ ; le capteur 34'ᵢ présente un cône de directivité de direction principale moyenne dᵢ et d'angle effectif de fonctionnement θᵢ ; le capteur 34'ᵢ₊₁ présente un cône de directivité de direction principale moyenne dᵢ₊₁ et d'angle effectif de fonctionnement θᵢ₊₁ ; ... ; et le capteur 34'_{N} présente un cône de directivité de direction principale moyenne d_{N} et d'angle effectif de fonctionnement θ_{N}. Au moins deux des directions principales moyennes d₁, ...,d_{N} sont distinctes l'une de l'autre. Dans l'exemple de la figure 2 elles sont mêmes toutes distinctes et convergent vers une zone de focalisation Z' correspondant à l'intersection des cônes de directivité. De même, au moins deux des angles effectifs de fonctionnement θ₁, ...,θ_{N} sont distincts l'un de l'autre. En particulier, ils peuvent être de valeurs inférieures à la valeur θ du dispositif de la figure 1 puisque les directions principales moyennes convergent vers la zone de focalisation Z', ce qui réduit les bruits parasites d'un capteur à l'autre.

Grâce à cette configuration particulière, les directivités des champs d'émission/réception des capteurs 34'₁, ...,34'_{N} sont maîtrisées. L'énergie totale de ces champs est concentrée autour de la zone de focalisation Z' ce qui améliore la précision des mesures.

Selon différentes variantes de réalisation possibles, chaque capteur 34'ᵢ peut être, indépendamment des autres, constitué d'un ou plusieurs transducteurs, ce(s) transducteur(s) étant mobile(s) ou rigide(s), avec ou sans sabot de réfraction. Chaque capteur peut-être lui-même être monté dans le boîtier 32 de façon rigide ou mobile. Le sabot de réfraction, lorsqu'il est prévu dans un capteur, peut en outre présenter une face avant flexible, conformément à l'enseignement du brevet FR 2 930 642. Sa présence dans un capteur permet de configurer l'orientation de la direction principale moyenne de ce capteur. Enfin, chaque capteur peut être à émetteurs et récepteurs séparés.

En particulier, lorsqu'un capteur 34'ᵢ comporte une pluralité de transducteurs, il reçoit une partie des signaux de commande émis par le circuit électronique 20. La loi de retards globale qui doit être appliquée à l'ensemble des capteurs pour converger vers le point focal F est alors adaptée pour chaque capteur en une loi de retards locale assurant cette focalisation. Cette adaptation d'une loi de retards globale en plusieurs lois de retards locales propres à chaque capteur est à la portée de l'homme de l'art et ne sera donc pas détaillée.

En particulier également, lorsque les transducteurs d'un capteur sont mobiles et/ou lorsque ce capteur est lui-même mobile, l'enseignement des brevets FR 2 786 651 et FR 2 862 385 peut être adapté pour tenir compte de cette mobilité dans le calcul de la loi de retards. Des moyens d'estimation des déplacements des transducteurs et capteurs mobiles doivent alors être prévus, mais ils ne sont pas illustrés sur la figure 2. Ils prennent la forme d'instruments profilométriques bidimensionnels ou tridimensionnels intégrés dans la sonde 16' dont les mesures servent à corriger la loi de retards. Mais en dehors de cela, l'adaptation des enseignements des brevets FR 2 786 651 et FR 2 862 385 à un dispositif de sondage selon l'invention est à la portée de l'homme de l'art et ne sera donc pas détaillée.

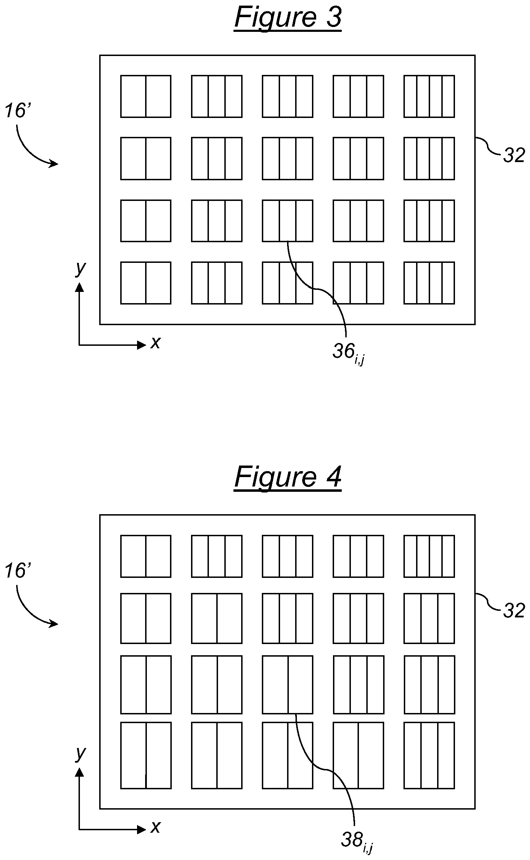

Une solution pour que les capteurs de la sonde 16' présentent des cônes de directivité distincts par leurs directions principales moyennes et/ou leurs angles effectifs de fonctionnement est illustrée, en vue de dessous de la sonde 16', sur les figures 3 et 4. Le cas particulier d'une disposition matricielle des capteurs dans la sonde 16' est choisi à titre purement illustratif.

Dans l'exemple de la figure 3, les capteurs 36_{i,j} d'une même ligne (direction x) se distinguent par le nombre de transducteurs qu'ils comportent, produisant ainsi des cônes de directivité différents, mais les capteurs 36_{i,j} d'une même colonne (direction y) sont tous identiques. Cela produit une sonde 16' à arrangement matriciel de capteurs présentant des cônes de directivité variables dans la direction x.

Dans l'exemple de la figure 4, les capteurs 38_{i,j} d'une même ligne (direction x) se distinguent par le nombre de transducteurs qu'ils comportent, produisant ainsi des cônes de directivité différents. Les capteurs 38_{i,j} d'une même colonne (direction y) peuvent également se distinguer par le nombre de transducteurs qu'ils comportent mais aussi par leurs tailles, produisant ainsi des cônes de directivité différents. Cela produit une sonde 16' à arrangement matriciel de capteurs présentant des cônes de directivité variables dans les deux directions x et y.

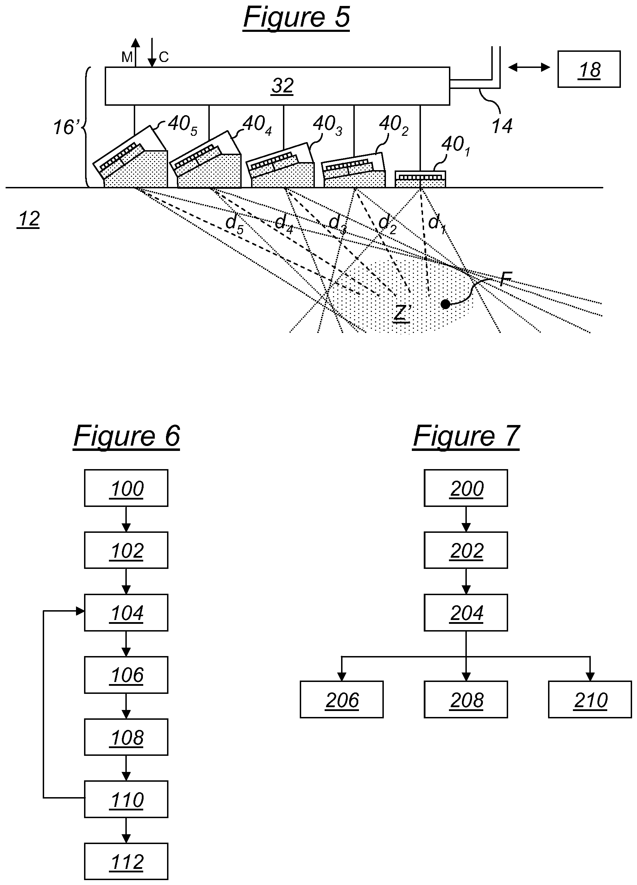

La figure 5 illustre un autre mode de réalisation de sonde pour un dispositif de sondage selon l'invention. Dans ce mode de réalisation particulier, des sabots de réfraction sont prévus dans au moins une partie des capteurs. Pour simplifier la description de ce mode de réalisation, seuls cinq capteurs sont indiqués et décrits.

Le premier capteur 40₁ comporte plusieurs transducteurs disposés linéairement ou en matrice, soit directement au contact de l'objet 12, soit contre une interface plane de réfraction posée contre l'objet 12. Le nombre de transducteurs dans ce premier capteur 40₁, les dimensions élémentaires de ces transducteurs, la fréquence de fonctionnement du capteur, ..., sont déterminés par simulations ou essais en fonction de la zone de focalisation Z' souhaitée. Le premier capteur 40₁ présente alors un premier cône de directivité de direction principale moyenne d₁ orientée vers la zone de focalisation Z'. Dans l'exemple illustré, compte tenu de la localisation de la zone de focalisation Z' par rapport à la sonde 16', la direction principale moyenne d₁ est proche de la normale à la surface de contact de l'objet 12. C'est la raison pour laquelle un sabot de réfraction n'est pas nécessaire dans ce premier capteur 40₁. On notera que le premier capteur 40₁ peut être relié de façon mobile au boîtier 32 de la sonde 16', par exemple à l'aide d'un piston, avec un degré de liberté en translation verticale et plusieurs en rotation grâce à une liaison rotule en extrémité de piston.

Le deuxième capteur 40₂ comporte plusieurs transducteurs disposés linéairement ou en matrice, contre un sabot de réfraction imposant un certain angle entre le plan principal des transducteurs et la surface de contact de l'objet 12. Le nombre de transducteurs dans ce deuxième capteur 40₂, les dimensions élémentaires de ces transducteurs, la fréquence de fonctionnement du capteur, l'angle imposé par le sabot, la taille du sabot, ..., sont déterminés par simulations ou essais en fonction de la zone de focalisation Z' souhaitée. Le deuxième capteur 40₂ présente alors un deuxième cône de directivité de direction principale moyenne d₂ orientée vers la zone de focalisation Z'. Dans l'exemple illustré, compte tenu de la localisation de la zone de focalisation Z' par rapport à la sonde 16', la direction principale moyenne d₂ est plus éloignée de la normale à la surface de contact de l'objet 12 que la direction d₁. C'est la raison pour laquelle un sabot de réfraction imposant un certain angle est nécessaire dans ce deuxième capteur 40₂. On notera que le deuxième capteur 40₂ peut également être relié de façon mobile au boîtier 32 de la sonde 16', par exemple à l'aide d'un piston, avec un degré de liberté en translation verticale et plusieurs en rotation grâce à une liaison rotule en extrémité de piston.

Le troisième capteur 40₃ comporte plusieurs transducteurs disposés linéairement ou en matrice, contre un sabot de réfraction imposant un certain angle entre le plan principal des transducteurs et la surface de contact de l'objet 12. Le nombre de transducteurs dans ce troisième capteur 40₃, les dimensions élémentaires de ces transducteurs, la fréquence de fonctionnement du capteur, l'angle imposé par le sabot, la taille du sabot, ..., sont déterminés par simulations ou essais en fonction de la zone de focalisation Z' souhaitée. Le troisième capteur 40₃ présente alors un troisième cône de directivité de direction principale moyenne d₃ orientée vers la zone de focalisation Z'. Dans l'exemple illustré, compte tenu de la localisation de la zone de focalisation Z' par rapport à la sonde 16', la direction principale moyenne d₃ est encore plus éloignée de la normale à la surface de contact de l'objet 12 que la direction d₂. C'est la raison pour laquelle un sabot de réfraction imposant un angle supérieur à celui imposé par le sabot du deuxième capteur 40₂ est nécessaire dans ce troisième capteur 40₃. On notera que le troisième capteur 40₃ peut également être relié de façon mobile au boîtier 32 de la sonde 16', par exemple à l'aide d'un piston, avec un degré de liberté en translation verticale et plusieurs en rotation grâce à une liaison rotule en extrémité de piston.

Le quatrième capteur 40₄ comporte plusieurs transducteurs disposés linéairement ou en matrice, contre un sabot de réfraction imposant un certain angle entre le plan principal des transducteurs et la surface de contact de l'objet 12. Le nombre de transducteurs dans ce quatrième capteur 40₄, les dimensions élémentaires de ces transducteurs, la fréquence de fonctionnement du capteur, l'angle imposé par le sabot, la taille du sabot, ..., sont déterminés par simulations ou essais en fonction de la zone de focalisation Z' souhaitée. Le quatrième capteur 40₄ présente alors un quatrième cône de directivité de direction principale moyenne d₄ orientée vers la zone de focalisation Z'. Dans l'exemple illustré, compte tenu de la localisation de la zone de focalisation Z' par rapport à la sonde 16', la direction principale moyenne d₄ est encore plus éloignée de la normale à la surface de contact de l'objet 12 que la direction d₃. C'est la raison pour laquelle un sabot de réfraction imposant un angle supérieur à celui imposé par le sabot du troisième capteur 40₃ est nécessaire dans ce quatrième capteur 40₄. On notera que le quatrième capteur 40₄ peut également être relié de façon mobile au boîtier 32 de la sonde 16', par exemple à l'aide d'un piston, avec un degré de liberté en translation verticale et plusieurs en rotation grâce à une liaison rotule en extrémité de piston.

Enfin, le cinquième capteur 40₅ comporte plusieurs transducteurs disposés linéairement ou en matrice, contre un sabot de réfraction imposant un certain angle entre le plan principal des transducteurs et la surface de contact de l'objet 12. Le nombre de transducteurs dans ce cinquième capteur 40₅, les dimensions élémentaires de ces transducteurs, la fréquence de fonctionnement du capteur, l'angle imposé par le sabot, ..., sont déterminés par simulations ou essais en fonction de la zone de focalisation Z' souhaitée. Le cinquième capteur 40₅ présente alors un cinquième cône de directivité de direction principale moyenne d₅ orientée vers la zone de focalisation Z'. Dans l'exemple illustré, compte tenu de la localisation de la zone de focalisation Z' par rapport à la sonde 16', la direction principale moyenne d₅ est encore plus éloignée de la normale à la surface de contact de l'objet 12 que la direction d₄. C'est la raison pour laquelle un sabot de réfraction imposant un angle supérieur à celui imposé par le sabot du quatrième capteur 40₄ est nécessaire dans ce cinquième capteur 40₅. On notera que le cinquième capteur 40₅ peut également être relié de façon mobile au boîtier 32 de la sonde 16', par exemple à l'aide d'un piston, avec un degré de liberté en translation verticale et plusieurs en rotation grâce à une liaison rotule en extrémité de piston.

La surface de l'objet 12 contre laquelle est positionnée la sonde 16' est représentée plane sur la figure 5. Mais la fabrication d'un dispositif de sondage tel que le dispositif 10', à capteurs multiples et mobiles par rapport au boîtier 32 de la sonde 16' à l'aide de leurs pistons, permet de faciliter l'inspection d'objets à surface irrégulière et prend même tout son sens dans ce contexte.

Le fonctionnement d'un dispositif de sondage selon l'invention va maintenant être décrit en référence aux figures 2 et 6. Plus précisément, c'est le principe de commande combinée de ses capteurs qui va être détaillé.

Au cours d'une étape 100, un opérateur configure les moyens de commande 18 du bras 14 afin que ce dernier puisse déplacer la sonde 16' selon un trajet souhaité au contact de l'objet 12.

Au cours d'une étape 102, l'opérateur définit les paramètres de focalisation qu'il enregistre dans la base de données 30.

On remarquera que les étapes 100 et 102 sont de préférences réalisées avant que le dispositif de sondage 10' ne débute le sondage proprement dit de l'objet 12. Par la suite, la sonde 16' se déplace par rapport à l'objet 12.

Au cours d'une étape 104, l'unité centrale de traitement 22 exécutant les instructions 26A détermine la loi de retards globale à appliquer aux capteurs de la sonde 16' à partir, d'une part, des paramètres de focalisation P_{F/B} et, d'autre part, des positions des transducteurs et/ou capteurs mobiles le cas échéant. Cette loi de retards globale est déclinée en autant de lois de retards locales que de capteurs dans la sonde 16'. Conformément à l'invention, la détermination de la loi de retards tient compte des différences entre cônes de directivité des capteurs 34'₁, ...,34'_{N}, notamment des différentes directions principales moyennes d₁, ...,d_{N} et des différents angles effectifs de fonctionnement θ₁, ..., θ_{N} associés aux capteurs.

Au cours d'une étape 106, l'unité centrale de traitement 22 exécutant les instructions 26B provoque la fourniture aux transducteurs des capteurs 34'₁, ...,34'_{N}, par le circuit électronique 20, de signaux de commande C présentant, les uns par rapport aux autres, des retards définis par la loi de retards calculée à l'étape précédente.

Au cours d'une étape 108, les transducteurs des capteurs 34'₁, ...,34'_{N}, en réponse aux signaux de commande C, émettent des ondes ultrasonores dans l'objet 12, qui focalisent en un point focal F ayant la position souhaitée par rapport au boîtier 32, grâce aux retards des signaux de commande C entre eux.

Au cours d'une étape 110, les transducteurs des capteurs 34'₁, ...,34'_{N} reçoivent les échos des ondes ultrasonores qui ont été réfléchies sur et dans l'objet 12, et fournissent au programme de traitement 28 les signaux de mesure M correspondants. Le procédé retourne alors à l'étape 104 pour une focalisation vers un autre point nécessitant une adaptation de la loi de retards ou un déplacement de la sonde 16'.

En parallèle aux étapes 104 à 110, ou bien à leur suite, après que la sonde 16' a réalisé le trajet prévu, au cours d'une étape 112, l'unité centrale de traitement 22 exécutant les instructions du programme de traitement 28 traite les signaux de mesure M, par exemple dans le but de détecter des défauts de structure dans l'objet 12, en affichant les résultats du traitement sur un écran.

Un exemple de procédé de fabrication d'un dispositif de sondage selon l'invention va maintenant être détaillé en référence aux figures 2 et 7.

Au cours d'une première étape 200 de détermination des contraintes de focalisation, un concepteur du dispositif de sondage 10' définit une direction principale d'inspection, c'est-à-dire la valeur moyenne de l'angle d'attaque souhaité pour inspecter l'objet 12. Par exemple, cette direction principale d'inspection est fixée à π/4. Le concepteur définit également la taille de la zone de focalisation Z' souhaitée. Celle-ci doit se trouver dans l'intersection des cônes de directivité des capteurs. Le concepteur définit en outre des paramètres d'irrégularités de la surface de l'objet 12 à inspecter, parce que ces irrégularités ont un impact sur des variations géométriques à prévoir autour de la direction principale d'inspection.

Au cours d'une étape 202 de description paramétrique de la sonde 16' du dispositif de sondage 10', le concepteur définit par exemple les paramètres suivants à optimiser :
- le paramètre N définissant le nombre de capteurs dans la sonde 16', puis, pour chaque capteur 34'ᵢ :
- le couple (dᵢ, θᵢ) de direction principale moyenne et d'angle effectif de fonctionnement,
- le nombre nᵢ de transducteurs dans ce capteur, les paramètres géométriques de ces transducteurs,
- le paramètre αᵢ d'angle imposé par l'interposition d'un sabot de réfraction entre le plan principal du ou des transducteurs de ce capteur et la surface de contact de l'objet 12 (incluant l'absence de sabot de réfraction lorsque αᵢ =0), et
- les paramètres géométriques du sabot de réfraction le cas échéant.

Au cours d'étapes suivantes 204, 206, 208 et 210, les paramètres précédemment définis sont optimisés à l'aide de simulations ou d'essais. En particulier, les simulations peuvent être menées à l'aide de l'outil logiciel de simulation pour le contrôle non destructif CIVA, développé par le Commissariat à l'énergie atomique et aux énergies alternatives.

Au cours de l'étape préliminaire 204 d'initialisation, le paramètre N ainsi que les couples (dᵢ, θᵢ) définissant les cônes de directivité peuvent être imposés par le concepteur sur la base des contraintes établies à l'étape 200.

Au cours de l'étape 206 d'optimisation des éléments transducteurs, des simulations ou essais permettent de déterminer de façon connue en soi, en fonction des contraintes établies à l'étape 200 et des paramètres imposés à l'étape préliminaire 204, le nombre nᵢ de transducteurs par capteur, les dimensions géométriques de ces transducteurs et leur fréquence de fonctionnement.

Au cours de l'étape 208 d'optimisation des sabots, des simulations ou essais permettent de déterminer de façon connue en soi, en fonction des contraintes établies à l'étape 200 et des paramètres imposés à l'étape préliminaire 204, les angles et dimensions des sabots. En particulier, les dimensions des sabots, directement liées à celles des capteurs qui les comportent, sont contraintes par les rayons de courbures locaux des irrégularités de surface de l'objet 12, comme cela a été mentionné précédemment. Par ailleurs, plus un capteur est loin de la zone de focalisation Z' et à direction principale moyenne éloignée de la normale à la surface de l'objet 12, plus ses dimensions doivent être grandes.

Au cours de l'étape 210 d'optimisation du système sonde au complet, des simulations ou essais permettent de déterminer de façon connue en soi, en fonction des contraintes établies à l'étape 200 et des paramètres imposés à l'étape préliminaire 204, l'assemblage mécanique des capteurs dans le boîtier 32, les principes de calcul de la loi de retards globale et des lois de retards locales à implémenter dans le circuit électronique 20, les besoins en instrumentation (par exemple, les besoins en profilomètres ou en dispositifs de recalage des mesures), etc.

Les étapes 206, 208 et 210 peuvent être exécutées simultanément ou successivement et dans n'importe quel ordre pour l'obtention d'un dispositif de sondage 10' complet optimisé pour une application donnée.

Il apparaît clairement qu'un dispositif de sondage à ultrasons tel que celui décrit précédemment selon plusieurs variantes de réalisation permet d'améliorer la dynamique et la précision de détection en optimisant l'énergie de focalisation et en minimisant les bruits parasites.

On notera par ailleurs que l'invention n'est pas limitée aux modes de réalisation décrits précédemment.

En particulier, ils pourraient être aisément perfectionnés par la prise en compte des enseignements divulgués dans les brevets précités FR 2 786 651 et FR 2 862 385, ou même dans la demande de brevet récemment publiée sous le numéro FR 2 963 443.

En outre, les instructions de programme d'ordinateur 26A et 26B pourraient être remplacées par des circuits électroniques conçus pour réaliser les mêmes fonctions.

En outre, les paramètres de focalisation peuvent être exprimés par rapport au boîtier comme décrit précédemment, ou bien par rapport à l'objet à sonder. Dans ce dernier cas, la position du boîtier par rapport à l'objet doit être connue et utilisée pour retrouver la position du point focal F par rapport au boîtier.

Enfin, il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif (10') de sondage à ultrasons comportant :
- un boîtier (32),
- des moyens (22, 26A) de détermination d'une loi de retards à partir de paramètres de focalisation représentant une position souhaitée d'un point focal (F) par rapport à un référentiel lié au boîtier (32),
- des moyens de commande (22, 26B) conçus pour fournir des signaux de commande (C) à partir de la loi de retards,
- une pluralité de capteurs (34'₁, ...,34'_{N}) attachés au boîtier (32) et disposés linéairement ou de façon matricielle dans celui-ci, conçus pour recevoir les signaux de commande (C) et pour, en réponse, émettre des ondes ultrasonores retardées les unes par rapport aux autres suivant la loi de retards de manière qu'elles focalisent au point focal (F) défini par les paramètres de focalisation, chaque capteur (34'ᵢ) présentant, par sa conception et sa disposition dans le boîtier (32), un cône de directivité, défini par une direction principale moyenne et un angle effectif de fonctionnement autour de cette direction principale moyenne, à l'extérieur duquel ce capteur n'est pas apte à viser acoustiquement un point par focalisation,
**caractérisé en ce qu'**au moins deux des capteurs (34'₁, ...,34'_{N}) sont conçus et disposés différemment l'un de l'autre de manière à présenter des cônes de directivité distincts au moins par leurs angles effectifs de fonctionnement (θ₁, ..., θ_{N}) de valeurs distinctes selon une variation dans au moins une direction (x, y) de la disposition linéaire ou matricielle.

2. Dispositif (10') de sondage à ultrasons selon la revendication 1, dans lequel les capteurs (34'₁, ...,34'_{N}) sont conçus et disposés différemment de manière à présenter des cônes de directivité orientés vers une zone limitée de focalisation (Z') commune à tous les capteurs, lesdites directions principales moyennes (d₁, ...,d_{N}) convergeant dans cette zone limitée de focalisation (Z').

3. Dispositif (10') de sondage à ultrasons selon la revendication 1 ou 2, dans lequel lesdits au moins deux des capteurs (34'₁, ...,34'_{N}) se distinguent l'un de l'autre par un nombre différent de transducteurs qu'ils comportent chacun, par une taille différente des transducteurs qu'ils comportent chacun ou par un angle d'un sabot de réfraction des ondes acoustiques qu'au moins l'un desdits au moins deux des capteurs (34'₁, ...,34'_{N}) comporte.

4. Dispositif (10') de sondage à ultrasons selon l'une quelconque des revendications 1 à 3, dans lequel au moins un des capteurs (34'₁, ...,34'_{N}) comporte un sabot de réfraction des ondes acoustiques permettant de configurer l'orientation de la direction principale moyenne (d₁, ... ,d_{N}) de ce capteur.

5. Dispositif (10') de sondage à ultrasons selon l'une quelconque des revendications 1 à 4, dans lequel au moins un des capteurs (34'₁, ...,34'_{N}) comporte une pluralité de transducteurs conçus pour recevoir une partie des signaux de commande (C) et pour, en réponse, émettre des ondes ultrasonores retardées les unes par rapport aux autres suivant une loi de retards définie pour ladite partie des signaux de commande (C) de manière qu'elles focalisent au point focal (F) défini par les paramètres de focalisation.

6. Dispositif (10') de sondage à ultrasons selon l'une des revendications 1 à 5, dans lequel les capteurs (34'₁, ...,34'_{N}) sont attachés de manière mobile au boîtier (32), comportant des moyens de localisation des capteurs (34'₁, ...,34'_{N}) conçus pour déterminer des positions des capteurs par rapport à un référentiel lié au boîtier (32) et dans lequel les moyens (22, 26A) de détermination de la loi de retards sont conçus pour déterminer la loi de retards à partir en outre de ces positions des capteurs.

7. Dispositif (10') de sondage à ultrasons selon l'une des revendications 1 à 6, dans lequel le ou les transducteurs d'un même capteur (34'ᵢ) sont attachés de manière mobile au capteur (34'ᵢ), comportant des moyens de localisation des transducteurs conçus pour déterminer des positions des transducteurs par rapport à un référentiel lié au capteur (34'ᵢ) dans lequel ils se trouvent, et dans lequel les moyens (22, 26A) de détermination de la loi de retards sont conçus pour déterminer la loi de retards à partir en outre de ces positions des transducteurs.

8. Procédé de fabrication d'un dispositif (10') de sondage à ultrasons selon l'une quelconque des revendications 1 à 7, **caractérisé en ce qu'**il comporte les étapes suivantes :
- détermination (200) de contraintes de focalisation parmi lesquelles une direction principale d'inspection du dispositif de sondage (10') et des paramètres géométriques d'une zone de focalisation (Z') souhaitée,
- identification (202) de paramètres du dispositif de sondage (10') parmi lesquels le nombre de capteurs (34'₁, ...,34'_{N}) et la direction principale moyenne (dᵢ) et l'angle effectif de fonctionnement (θᵢ) du cône de directivité de chaque capteur (34'ᵢ), ce cône de directivité de chaque capteur étant un cône à l'extérieur duquel ce capteur n'est pas apte à viser acoustiquement un point par focalisation,
- optimisation (204, 206, 208, 210) desdits paramètres du dispositif de sondage (10') à l'aide de simulations ou d'essais en fonction desdites contraintes de focalisation, cette optimisation comportant une différenciation des cônes de directivité au moins par leurs angles effectifs de fonctionnement (θ₁, ..., θ_{N}) de valeurs distinctes selon une variation dans au moins une direction (x, y) de la disposition linéaire ou matricielle de la pluralité de capteurs (34'₁, ...,34'_{N}) dans le boîtier (32).

9. Procédé de commande de capteurs (34'₁, ...,34'_{N}) d'une sonde à ultrasons (16'), chaque capteur (34'ᵢ) présentant par conception et disposition dans un boîtier (32) de la sonde un cône de directivité, défini par une direction principale moyenne et un angle effectif de fonctionnement autour de cette direction principale moyenne, à l'extérieur duquel ce capteur n'est pas apte à viser acoustiquement un point par focalisation, le procédé comportant les étapes suivantes :
- déterminer (104) une loi de retards à partir de paramètres de focalisation représentant une position souhaitée d'un point focal (F) par rapport à un référentiel lié au boîtier (32),
- fournir (106) des signaux de commande (C) aux capteurs (34'₁, ...,34'_{N}) à partir de la loi de retards,
**caractérisé en ce que**, les capteurs (34'₁, ...,34'_{N}) étant disposés linéairement ou de façon matricielle dans le boîtier (32), au moins deux des capteurs (34'₁, ...,34'_{N}) sont conçus et disposés différemment l'un de l'autre de manière à présenter des cônes de directivité distincts au moins par leurs angles effectifs de fonctionnement (θ₁, ..., θ_{N}) de valeurs distinctes selon une variation dans au moins une direction (x, y) de la disposition linéaire ou matricielle et la détermination (104) de la loi de retards tient compte de ces distinctions.

10. Programme d'ordinateur téléchargeable depuis un réseau de communication et/ou enregistré sur un support lisible par ordinateur et/ou exécutable par un processeur, **caractérisé en ce qu'**il comprend des instructions pour la mise en oeuvre d'un procédé de commande de capteurs (34'₁, ...,34'_{N}) d'une sonde à ultrasons (16') selon la revendication 9, lorsque ledit programme est exécuté par un ordinateur.

## Patentansprüche

1. Ultraschall-Abtastvorrichtung (10'), aufweisend:
- ein Gehäuse (32),
- Mittel (22, 26A) zum Bestimmen eines Verzögerungsgesetzes aus Fokussierungsparametern, die eine gewünschte Position eines Fokalpunktes (F) in Bezug auf ein mit dem Gehäuse (32) verbundenes Bezugssystem darstellen,
- Steuermittel (22, 26B), die beschaffen sind, um Steuersignale (C) aus dem Verzögerungsgesetz bereitzustellen,
- eine Vielzahl von Sensoren (34'₁, ..., 34'_{N}), die an dem Gehäuse (32) angebracht und linear oder matrixförmig in diesem angeordnet sind, die beschaffen sind, um die Steuersignale (C) zu empfangen und um als Antwort zueinander verzögerte Ultraschallwellen gemäß dem Verzögerungsgesetz derart zu senden, dass sie auf den Fokalpunkt (F) fokussieren, der von den Fokussierungsparametern definiert ist, wobei jeder Sensor (34'ᵢ,) aufgrund seiner Beschaffenheit und seiner Anordnung in dem Gehäuse (32) einen Richtkonus aufweist, der durch eine mittlere Hauptrichtung und einen effektiven Funktionswinkel um diese mittlere Hauptrichtung definiert ist, außerhalb desselben dieser Sensor nicht imstande ist, einen Punkt durch Fokussieren akustisch anzuvisieren,
**dadurch gekennzeichnet, dass** mindestens zwei der Sensoren (34'₁, ..., 34'_{N}) derart unterschiedlich voneinander beschaffen und angeordnet sind, dass sie Richtkonen aufweisen, die sich mindestens durch ihre effektiven Funktionswinkel (θ₁, ..., θ_{N}) unterschiedlicher Werte gemäß einer Variation in mindestens einer Richtung (x, y) der linearen oder matrixförmigen Anordnung unterscheiden.

2. Ultraschall-Abtastvorrichtung (10') nach Anspruch 1, wobei die Sensoren (34'₁, ..., 34'_{N}) derart unterschiedlich beschaffen und angeordnet sind, dass sie Richtkonen aufweisen, die zu einer begrenzten Fokussierungszone (Z') ausgerichtet sind, die allen Sensoren gemeinsam ist, wobei die mittleren Hauptrichtungen (d₁, ..., d_{N}) in dieser begrenzten Fokussierungszone (Z') konvergieren.

3. Ultraschall-Abtastvorrichtung (10') nach Anspruch 1 oder 2, wobei sich die mindestens zwei der Sensoren (34'₁, ..., 34'_{N}) durch eine unterschiedliche Anzahl von Transducern, die sie jeweils aufweisen, durch eine unterschiedliche Größe der Transducer, die sie jeweils aufweisen, oder durch einen Winkel eines Brechungskeils der akustischen Wellen, den mindestens einer der mindestens zwei der Sensoren (34'₁, ..., 34'_{N}) aufweist, voneinander unterscheiden.

4. Ultraschall-Abtastvorrichtung (10') nach einem der Ansprüche 1 bis 3, wobei mindestens einer der Sensoren (34'₁, ..., 34'_{N}) einen Brechungskeil der akustischen Wellen aufweist, der erlaubt, die Ausrichtung der mittleren Hauptrichtung (d₁, ..., d_{N}) dieses Sensors zu konfigurieren.

5. Ultraschall-Abtastvorrichtung (10') nach einem der Ansprüche 1 bis 4, wobei mindestens einer der Sensoren (34'₁, ..., 34'_{N}) eine Vielzahl von Transducern aufweist, die beschaffen sind, um einen Teil der Steuersignale (C) zu empfangen und um als Antwort gemäß einem für den Teil der Steuersignale (C) definierten Verzögerungsgesetz zueinander verzögerte Ultraschallwellen derart zu senden, dass sie auf den Fokalpunkt (F) fokussieren, der von den Fokussierungsparametern bestimmt ist.

6. Ultraschall-Abtastvorrichtung (10') nach einem der Ansprüche 1 bis 5, wobei die Sensoren (34'₁, ..., 34'_{N}) beweglich an dem Gehäuse (32) angebracht sind, aufweisend Lokalisierungsmittel der Sensoren (34'₁, ..., 34'_{N}), die beschaffen sind, um Positionen der Sensoren in Bezug auf ein mit dem Gehäuse (32) verbundenes Bezugssystem zu bestimmen und wobei die Mittel (22, 26A) zum Bestimmen des Verzögerungsgesetzes beschaffen sind, um das Verzögerungsgesetz ferner aus diesen Positionen der Sensoren zu bestimmen.

7. Ultraschall-Abtastvorrichtung (10') nach einem der Ansprüche 1 bis 6, wobei der oder die Transducer eines selben Sensors (34'ᵢ) beweglich an dem Sensor (34'ᵢ) angebracht sind, aufweisend Lokalisierungsmittel der Transducer, die beschaffen sind, um Positionen der Transducer in Bezug auf ein mit dem Sensor (34'ᵢ) verbundenes Bezugssystem zu bestimmen, in dem sie sich befinden, und wobei die Mittel (22, 26A) zum Bestimmen des Verzögerungsgesetzes beschaffen sind, um das Verzögerungsgesetz ferner aus diesen Positionen der Transducer zu bestimmen.

8. Verfahren zur Herstellung einer Ultraschall-Abtastvorrichtung (10') nach einem der Ansprüche 1 bis 7, **dadurch gekennzeichnet, dass** es die folgenden Schritte aufweist:
- Bestimmen (200) von Fokussierungszwängen, unter denen eine Hauptinspektionsrichtung der Ultraschall-Abtastvorrichtung (10') und geometrische Parameter einer gewünschten Fokussierungszone (Z'),
- Identifizieren (202) von Parametern der Ultraschall-Abtastvorrichtung (10'), unter denen die Anzahl von Sensoren (34'₁, ..., 34'_{N}) und die mittlere Hauptrichtung (dᵢ) und der effektive Funktionswinkel (θᵢ) des Richtkonus jedes Sensors (34'ᵢ), wobei dieser Richtkonus jedes Sensors ein Konus ist, außerhalb desselben dieser Sensor nicht imstande ist, einen Punkt durch Fokussieren akustisch anzuvisieren,
- Optimieren (204, 206, 208, 210) der Parameter der Ultraschall-Abtastvorrichtung (10') mit Hilfe von Simulationen oder Tests in Abhängigkeit von den Fokussierungszwängen, wobei diese Optimierung eine Differenzierung der Richtkonen mindestens durch ihre effektiven Funktionswinkel (θ₁, ..., θ_{N}) unterschiedlicher Werte gemäß einer Variation in mindestens einer Richtung (x, y) der linearen oder matrixförmigen Anordnung der Vielzahl von Sensoren (34'₁, ..., 34'_{N}) in dem Gehäuse (32) aufweist.

9. Verfahren zur Steuerung von Sensoren (34'₁, ..., 34'_{N}) einer Ultraschallsonde (16'), wobei jeder Sensor (34'ᵢ) durch Beschaffenheit und Anordnung in einem Gehäuse (32) der Sonde einen Richtkonus aufweist, definiert durch eine mittlere Hauptrichtung und einen effektiven Funktionswinkel um diese mittlere Hauptrichtung, außerhalb desselben dieser Sensor nicht imstande ist, einen Punkt durch Fokussieren akustisch anzuvisieren, wobei das Verfahren die folgenden Schritte aufweist:
- Bestimmen (104) eines Verzögerungsgesetzes aus Fokussierungsparametern, die eine gewünschte Position eines Fokalpunktes (F) in Bezug auf ein mit dem Gehäuse (32) verbundenes Bezugssystem darstellen,
- Bereitstellen (106) der Steuersignale (C) für die Sensoren (34'₁, ..., 34'_{N}) aus dem Verzögerungsgesetz,
**dadurch gekennzeichnet, dass**, wobei die Sensoren (34'₁, ..., 34'_{N}) linear oder matrixförmig in dem Gehäuse (32) angeordnet sind, mindestens zwei der Sensoren (34'₁, ..., 34'_{N}) derart unterschiedlich voneinander beschaffen und angeordnet sind, dass sie Richtkonen aufweisen, die sich mindestens durch ihre effektiven Funktionswinkel (θ₁, ..., θ_{N}) unterschiedlicher Werte gemäß einer Variation in mindestens einer Richtung (x, y) der linearen oder matrixförmigen Anordnung unterscheiden und die Bestimmung (104) des Verzögerungsgesetzes diese Unterschiede berücksichtigt.

10. Von einem Kommunikationsnetz herunterladbares und/oder auf einem rechnerlesbaren Träger gespeichertes und/oder von einem Prozessor ausführbares Rechnerprogramm, **dadurch gekennzeichnet, dass** es Befehle für die Durchführung eines Verfahrens zum Steuern von Sensoren (34'₁, ..., 34'_{N}) einer Ultraschall-Sonde (16') nach Anspruch 9 umfasst, wenn das Programm von einem Rechner ausgeführt wird.

## Claims

1. Ultrasonic probe device (10') comprising:
- a housing (32),
- means (22, 26A) for determining a delay rule based on focus parameters representing a desired position of a focal point (F) relative to a reference frame connected to the housing (32),
- control means (22, 26B) designed to provide control signals (C) based on the delay rule,
- a plurality of sensors (34'₁, ..., 34'_{N}) attached to the housing (32) and arranged linearly or in an array therein, designed to receive the control signals (C) and, in response thereto, to emit ultrasound waves delayed from one another in accordance with the delay rule such that they focus on the focal point (F) defined by the focus parameters, each sensor (34'ᵢ) having, through the design and arrangement thereof within the housing (32), a directivity cone defined by a mean main direction and an effective operating angle around this mean main direction, outside of which this sensor is not capable of acoustically targeting a point by focusing,
**characterised in that** at least two of the sensors (34'1, ..., 34'_{N}) are designed and arranged differently from one another so as to have directivity cones that differ at least by the effective operating angles (θ₁, ..., θ_{N}) thereof, the values whereof differ depending on a variation in at least one direction (x, y) of the linear or array arrangement.

2. Ultrasonic probe device (10') according to claim 1, wherein the sensors (34'₁, ..., 34'_{N}) are designed and arranged differently so as to have directivity cones oriented towards a limited focus area (Z') common to all sensors, said mean main directions (d_{1;} ..., d_{N}) converging in said limited focus area (Z').

3. Ultrasonic probe device (10') according to either claim 1 or claim 2, wherein said at least two of the sensors (34'₁, ..., 34'_{N}) differ from one another by a different number of transducers that they each comprise, by a different size of the transducers that they each comprise or by an angle of a wedge for refracting the acoustic waves that at least one of said at least two of the sensors (34'₁, ..., 34'_{N}) comprises.

4. Ultrasonic probe device (10') according to any of claims 1 to 3, wherein at least one of the sensors (34'₁, ..., 34'_{N}) comprises a wedge for refracting the acoustic waves, allowing the orientation of the mean main direction (d₁, ...,d_{N}) of this sensor to be configured.

5. Ultrasonic probe device (10') according to any of claims 1 to 4, wherein at least one of the sensors (34'₁, ..., 34'_{N}) comprises a plurality of transducers designed to receive part of the control signals (C) and, in response thereto, to emit ultrasound waves delayed from one another in accordance with a delay rule defined for said part of the control signals (C) such that they focus on the focal point (F) defined by the focus parameters.

6. Ultrasonic probe device (10') according to one of claims 1 to 5, wherein the sensors (34'₁, ..., 34'_{N}) are attached in a movable manner to the housing (32), comprising means for locating the sensors (34'₁, ..., 34'_{N}) designed to determine positions of the sensors relative to a reference frame connected to the housing (32) and wherein the means (22, 26A) for determining the delay rule are designed so as to determine the delay rule also based on these sensor positions.

7. Ultrasonic probe device (10') according to one of claims 1 to 6, wherein the one or more transducers of the same sensor (34'ᵢ) are attached in a movable manner to the sensor (34'ᵢ), comprising means for locating the transducers designed to determine positions of the transducers relative to a reference frame connected to the sensor (34'ᵢ), in which they are situated, and wherein the means (22, 26A) for determining the delay rule are designed so as to determine the delay rule also based on these transducer positions.

8. Method for manufacturing an ultrasonic probe device (10') according to any of claims 1 to 7, **characterised in that** it comprises the steps of:
- determining (200) focus constraints including a main inspection direction of the probe device (10') and geometric parameters of a desired focus area (Z'),
- identifying (202) parameters of the probe device (10') including the number of sensors (34'₁, ..., 34'_{N}) and the mean main direction (dᵢ) and the effective operating angle (θᵢ) of the directivity cone of each sensor (34'ᵢ), this directivity cone of each sensor being a cone outside of which this sensor is not capable of acoustically targeting a point by focusing,
- optimising (204, 206, 208, 210) said parameters of the probe device (10') using simulations or tests as a function of said focus constraints, this optimisation comprising a differentiation of the directivity cones at least by the effective operating angles (θ₁, ..., θ_{N}) thereof, the values whereof differ depending on a variation in at least one direction (x, y) of the linear or array arrangement of the plurality of sensors (34'₁, ..., 34'_{N}) in the housing (32).

9. Method for controlling sensors (34'₁, ..., 34'_{N}) of an ultrasonic probe (16'), each sensor (34'ᵢ) having, by design and arrangement within a housing (32) of the probe, a directivity cone, defined by a mean main direction and an effective operating angle around this mean main direction, outside of which this sensor is not capable of acoustically targeting a point by focusing, the method comprising the steps of:
- determining (104) a delay rule based on focus parameters representing a desired position of a focal point (F) relative to a reference frame connected to the housing (32),
- providing (106) control signals (C) to the sensors (34'₁, ..., 34'_{N}) based on the delay rule,
**characterised in that**, with the sensors (34'₁, ..., 34'_{N}) being arranged linearly or in an array in the housing (32), at least two of the sensors (34'₁, ..., 34'_{N}) are designed and arranged differently from one another so as to have directivity cones that differ at least by the effective operating angles (θ₁, ..., θ_{N}) thereof, the values whereof differ depending on a variation in at least one direction (x, y) of the linear or array arrangement and the determination (104) of the delay rule takes into account these distinctions.

10. Computer program that can be downloaded from a communication network and/or saved on a computer-readable medium and/or executable by a processor, **characterised in that** it comprises instructions for implementing a method for controlling sensors (34'₁, ...,34'_{N}) of an ultrasonic probe (16') according to claim 9, when said program is executed by a computer.
